(19) Europäisches Patentamt
European Patent Office
Office européen des brevets

(11) **EP 4 328 811 A1**

(12) **EUROPEAN PATENT APPLICATION**

(43) Date of publication:
**28.02.2024  Bulletin 2024/09**

(21) Application number: **22306269.6**

(22) Date of filing: **26.08.2022**

(51) International Patent Classification (IPC):
**G06N 10/40** *(2022.01)*     *G01R 33/00* *(2006.01)*
**G04F 5/14** *(2006.01)*

(52) Cooperative Patent Classification (CPC):
**G06N 10/40**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Centre National de la Recherche Scientifique
75016 Paris (FR)**

• **Université de Strasbourg
67000 Strasbourg (FR)**

(72) Inventor: **WHITLOCK, Shannon
67000 STRASBOURG (FR)**

(74) Representative: **Lavoix
2, place d'Estienne d'Orves
75441 Paris Cedex 09 (FR)**

(54) **A METHOD FOR CONTROLLING A SYSTEM OF QUANTUM OBJECTS AND ASSOCIATED DEVICE**

(57)     The invention relates to a method for controlling a system (10) of quantum objects (12), the method comprising the following steps:
- identifying target quantum object(s) of the system (10) of quantum object(s), and
- applying a control signal on at least the target quantum object(s) to realize a controlled quantum operation on the target quantum object(s), the control signal being a standing light wave having an amplitude and a phase, the phase being spatially uniform over some regions of space, the standing light wave being applied such that the position of each target quantum object coincides with a region of spatially uniform phase.

FIG.1

**Description**

TECHNICAL FIELD OF THE INVENTION

The present invention concerns a method for controlling a system of quantum objects. The present invention also concerns a device for controlling a system of quantum objects.

BACKGROUND OF THE INVENTION

Precisely controlled quantum systems are presently one of the leading candidates for numerous technologies which exploit quantum mechanical principles to achieve precision, sensitivity or accuracy which exceeds any classical technology. In this context atom and atom-like systems (here-forth just atoms) are a leading platform for scalable quantum computing, optical atomic clocks and quantum sensors, among other applications.
A key requirement is to be able to reliably control the quantum mechanical phase of the quantum system. In the case of atoms, or atom-like systems, this control is typically done using coherent electromagnetic fields to implement the desired quantum operations. Primarily we use light fields to refer to electromagnetic fields in the optical domain, such as laser fields, but it could also apply to radio-frequency, microwave or terrahertz fields in a similar manner. A single monochromatic light field propagating in the x direction is described by a wavefunction $\varepsilon(t) = e_0 e^{i(kx+\varphi)-i\omega t}$ where $\varepsilon_0$ is the complex valued field amplitude, $k$ is the wavevector, $\omega$ is the field frequency and $\varphi$ is the phase of the light field, here-forth just phase. In the following we refer to the factor $kx + \varphi$ as the local phase. If $\varphi$ varies as a function of time, we call it the temporal phase.
With respect to single atom rotation operations and where the atom comprises two effective quantum states $|0\rangle$ and $|1\rangle$, a general quantum operation transforms the state of the atom in the following way:

$$|0\rangle \rightarrow \cos\left(\frac{\theta}{2}\right)|0\rangle + \sin\left(\frac{\theta}{2}\right)e^{i\phi}|1\rangle \qquad (1)$$

$$|1\rangle \rightarrow \cos\left(\frac{\theta}{2}\right)|1\rangle - \sin\left(\frac{\theta}{2}\right)e^{-i\phi}|0\rangle$$

For the purposes of this disclosure we refer to $\theta$ as the rotation angle and $\phi$ as the atomic phase angle or simply the atomic phase.
This kind of quantum operation can be realized by coupling the atom to one or more coherent light fields. The coupling strength is proportional to the light field amplitude and $\phi$ is determined by, and very sensitive to, the local phase at the position of the atom. Accordingly, phase noise and atom position variations constitute a dominant cause of errors.
One solution to this problem is to optically couple two atomic levels via a shared excited level $|0\rangle \leftrightarrow |e\rangle \leftrightarrow |1\rangle$ in a so-called Raman configuration. This typically utilizes two co-propagating lasers with different frequencies tuned to be in two-photon resonance. In this case the effective coupling is proportional to the product of the couplings of the individual transitions $|0\rangle \leftrightarrow |e\rangle$ and $|e\rangle \leftrightarrow |1\rangle$ and the effective wavevector is given by the difference of the two laser wavevectors (if the $|e\rangle$ state has a higher (or lower) energy than both $|0\rangle$ and $|1\rangle$). For two lasers with similar wavevectors it is possible to mostly cancel out the spatial dependence of the phase.
In practice, this requires that the effective wavevector is small compared to the inverse of the characteristic length scale of the atom position variations. This is not the case for many quantum systems used for quantum technology applications, including optical lattice clocks and sensors, and quantum computing systems based on optical frequency qubits, and quantum logic exploiting interactions between highly excited Rydberg states. In these situations, it is necessary to very carefully stabilize the local phase and localize the positions of the atoms to much less than the optical wavelength, which is technically very challenging.
In the context of quantum computing and quantum information processing, it is often required to apply large numbers of phase-controlled operations to individually targeted atoms in large atomic arrays. This further increases the complexity of the required control systems and the susceptibility to phase noise and atom position fluctuations.

SUMMARY OF THE INVENTION

There is therefore a need for a method enabling to control a system of quantum objects in a more robust way.
To this end, the invention relates to a method for controlling a system of quantum objects, the method comprising the following steps:

- identifying target quantum object(s) of the system of quantum object(s), and

- applying a control signal on at least the target quantum object(s) to realize a controlled quantum operation on the target quantum object(s), the control signal being a standing light wave having an amplitude and a phase, the phase being spatially uniform over some regions of space, the standing light wave being applied such that the position of each target quantum object coincides with a region of spatially uniform phase.

The method may comprise one or more of the following features considered alone or in any combination that is technically possible:

- the phase is constant over a distance comparable to or larger than the position uncertainty of the target quantum object(s);
- the time evolution of the quantum state of each target quantum object, following the application of the control signal, is represented by a time-dependent quantum Hamiltonian, the quantum Hamiltonian comprising drive terms proportional to the complex amplitude of the coupling strength between the target quantum object(s) and the standing light wave, called coupling strength, the complex amplitude of the coupling strength being given by the following equation:

$$\Omega(t) = A(t)e^{i\varphi(t)}$$

where :

- $\Omega(t)$ is the complex amplitude of the coupling strength,
- $A(t)$ is a real quantity proportional to the amplitude of the standing light wave,
- $\varphi(t)$ is the relative phase between the phase of the quantum objects and the phase of the standing light wave,
- $i = \sqrt{-1}$ is the imaginary unit, and
- e is the exponential function;

- the control signal is formed by two non-co-propagating light fields having the same frequency, the non-co-propagating light fields being for example laser beams;
- the system of quantum objects formed an array of quantum objects in one or two dimensions, the array of quantum objects defining an array plane, the two non-co-propagating light fields being i) counter propagating, ii) incident substantially perpendicularly to the array plane and iii) focused on the target quantum object(s) for spatial addressing;
- the system of quantum objects formed an array of quantum objects in one or two or three dimensions, the actions of addressing the target quantum object(s) and controlling the target quantum object(s) being decoupled through the use of an addressing signal which is different from the control signal;
- the method comprises a step of applying the addressing signal only to the target quantum object(s), the addressing signal causing a shift in energy of the target quantum object(s), the control signal being applied to both the target quantum object(s) and to other quantum objects of the system, called auxiliary quantum objects;
- the amplitude and the phase of the control signal are also chosen so as to:

  - realize the quantum operation on the target quantum object(s) dependent on the shift in energy of the target quantum object(s), and
  - make the auxiliary quantum objects return to their original state at the end of the application of the control signal;

- the addressing signal is applied to the target quantum object(s) simultaneously to the control signal;
- the control signal satisfies a constraint stating that the complex amplitude of the coupling strength between the target quantum object(s) and the standing light wave, called coupling strength, is an antisymmetric function of time;
- the quantum objects are chosen among the following elements: neutral atoms, ions, molecules, quantum dots, spin defects in solids, photons, electrons, superconducting qubits, or any other elements having two or more discrete energy levels that can be coupled to light.

The invention also relates to a device a device for controlling a system of quantum objects, the device comprising:

- at least one light source to generate light fields, and
- a controller configured to control the at least one light source so as to carry out a method as previously described.

BRIEF DESCRIPTION OF THE DRAWINGS

The invention will be easier to understand in view of the following description, provided solely as an example and with reference to the appended drawings in which:

- Figure 1 is a schematic representation of an example of a system of quantum objects and of a device for controlling the system of quantum objects,
- Figure 2 is a schematic representation of the spatially dependent intensity and phase of laser beams in a travelling wave configuration/co-propagating geometry,
- Figure 3 is a schematic representation of the spatially dependent intensity and phase of laser beams in a standing wave configuration/counter-propagating geometry,
- Figure 4 is an example of two pulse sequences a) and b) which both realize an X rotation gate with a rotation angle of $\theta = \dfrac{\pi}{2}$,
- Figure 5 is a graph quantifying the infidelity due to residual local phase noise and atom position variations for a "Rabi" $\dfrac{\pi}{2}$ pulse, and for the two pulse sequences a) and b) of figure 4,
- Figure 6 is a schematic representation illustrating two counter propagating control beams which are incident substantially perpendicularly to the array plane and focused on one or more target atoms for spatial addressing,
- Figure 7 is a schematic representation illustrating an addressing laser beam focused on a target atom and two control beams unfocused on both the target atom and auxiliary atoms of the set of quantum objects, and
- Figure 8 is an example of a pulse sequence for an addressing signal and a control signal in order to realize an X rotation gate with a rotation angle of $\theta = \dfrac{\pi}{2}$ compatible with spatial addressing and global control fields.

DETAILED DESCRIPTION OF SOME EMBODIMENTS

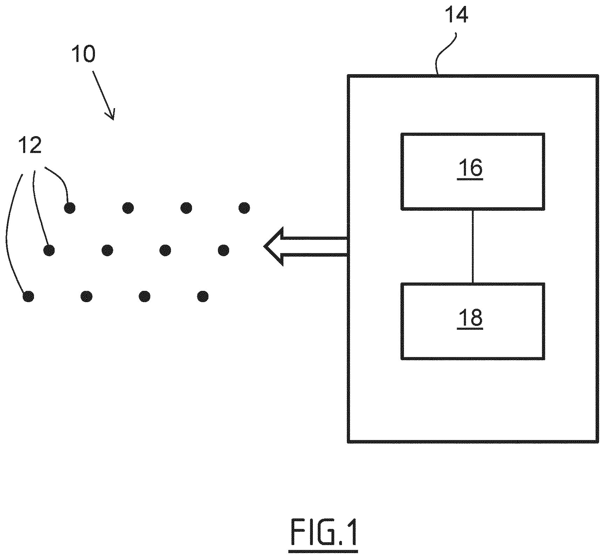

An example of a system 10 of quantum objects 12 and of a device 14 for controlling the system 10 of quantum objects 12 is illustrated on figure 1.

The system 10 of quantum objects 12 are for example intended to be part of one of the following elements: a quantum computer, an optical atomic clock or a quantum sensor.

The quantum objects 12 are objects whose dynamics cannot be described using classical physics, but instead can only accurately be described using the principles of quantum mechanics.

The quantum objects 12 are for example chosen among the following elements: neutral atoms, ions, molecules, quantum dots, spin defects in solids, photons, electrons, superconducting qubits, or any other elements having two or more discrete energy levels that can be coupled to light.

In the example of the following description, the quantum objects 12 are atoms (trapped ions, neutral atoms). However, the present invention applies to all the types of quantum objects previously described.

The device 14 enables to control the system 10 of quantum objects 12, that is to say to realize quantum operations on the system 10 of quantum objects 12.

The device 14 comprises at least one light source 16 and a controller 18.

Each light source 16 is able to generate light fields. In an example, the or each light source 16 is a laser generating optical beams. In a variant, the or each light source 16 generates microwave fields or terahertz fields.

The controller 18 is configured to control the at least one light source 16 so as to carry out a method for controlling the system 10 of quantum objects 12 that will be described in the following of the description.

The controller 18 comprises for example a signal generator and an optical modulator used to control the amplitude and phase of the light field.

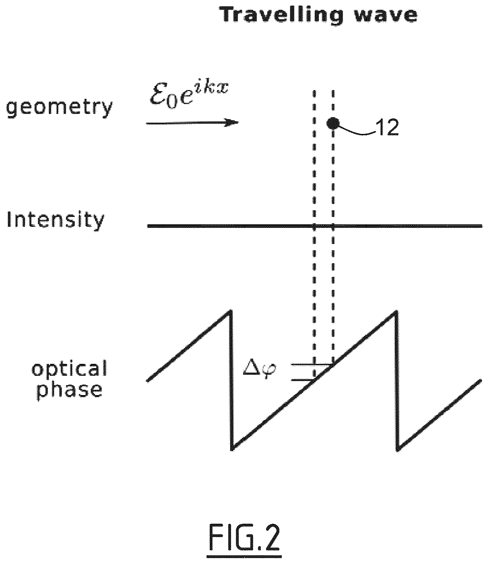

A method for controlling the system 10 of quantum objects 12 will now be described with reference to figures 2 to 8. The method is carried out by the control device 14.

The method comprises a step of identifying target quantum object(s) of the system 10 of quantum object(s). The target quantum object(s) are for example predetermined. The other quantum objects are called auxiliary quantum objects.

The method then comprises a step of applying a control signal on at least the target quantum object(s) to realize a controlled quantum operation on the target quantum object(s). The quantum operation is for example a quantum gate.

The control signal is a standing light wave. A standing wave, also called stationary wave, is a wave that oscillates in time but whose peak amplitude profile does not move in space. The peak amplitude of the wave oscillations at any point in space is constant with respect to time, and the oscillations at different points throughout the wave are in phase. The locations at which the absolute value of the amplitude is minimum are called nodes, and the locations where the absolute value of the amplitude is maximum are called antinodes.

The standing light wave has an amplitude and a phase. The phase is spatially uniform (constant) over some regions of space.

Preferably, the phase is constant over a distance comparable to or larger than the position uncertainty of the target quantum object(s). This enables the quantum operation to be more robust to variations in the quantum objects positions.

Preferably, the distance is equal to half the period (wavelength) of the standing wave.

In an example, the phase is spatially uniform (constant) between each adjacent pair of nodes of the standing light wave.

The standing wave is applied such that the position of each target quantum object coincides with a region of spatially uniform phase. In other words, the position of each target quantum object nominally coincides with an antinode of the standing wave.

Preferably, for arrays of quantum objects 12 (especially trapped atoms), the period of the array is ideally commensurate with the standing wave period.

Alternatively, the antinodes of the standing wave can be tuned to coincide with the nominal quantum objects position in a scanning manner by shifting the relative phase of the control fields forming the standing wave. For atoms, the shift of the relative phase of the control fields is, for example, obtained by moving a mirror or using an electro-optic or acousto-optic phase shifter.

Preferably, the control signal is formed by two non-co-propagating light fields having the same frequency. The non-co-propagating light fields are for example laser beams. By the term "non-co-propagating", it is understood that the fields do not propagate in the same direction. In a variant, the control signal is formed by single laser coupled to an optical cavity or by holographic techniques or by integrated photonic devices which may offer additional advantages including common mode rejection of noise sources, faster quantum operations, and efficient atom-photon interconversion.

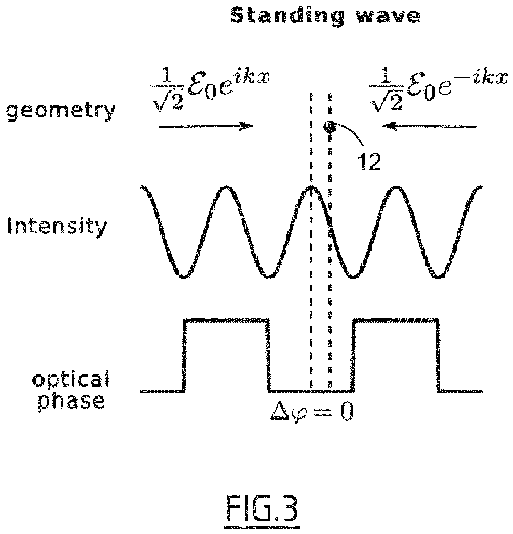

On the basis of this example, figures 2 and 3 depict the spatially dependent intensity and phase of laser beams in (i) travelling wave (also called running wave) configuration/co-propagating geometry (state of the art, figure 2) and (ii) standing wave configuration/counter-propagating geometry (figure 3). As illustrated on figure 2, the intensity is spatially uniform and the phase is a linearly varying function of position. As illustrated on figure 3, the intensity is periodically modulated (owing to optical interferences) and the phase exhibits regions with a uniform phase (step like features in figure 3).

In the travelling wave configuration (figure 2), atom position variations away from their nominal position or phase noise will result in the atoms acquiring an extra phase $\Delta\varphi = kx$, which reduces the fidelity of the desired quantum operation. In the standing wave configuration (figure 3), the extra phase is zero due to the spatial uniformity of the phase which makes it possible to realize phase-controlled quantum operations in a way that is insensitive to the atom positions or the differential phase.

In particular, absolute stability of the phase and the interference pattern is for example achieved by locking the control laser(s) to a length stabilized optical reference cavity or an optical frequency comb reference using for example the Pound-Drever-Hall technique.

Relative phase fluctuations are for example passively stabilized or actively using an interferometric measurement and fast feedback on the optical path length.

The non-uniformity of the intensity in the standing wave configuration converts atom position fluctuations to effective amplitude errors which are for example corrected by using composite pulse techniques or dynamically corrected gates.

Preferably, to realize the desired quantum operations, the light fields (laser beams for atoms and atoms like systems) have the same tailored time-dependent amplitudes and temporal phases, realized for example by passing both light beams through a common electro-optic or acousto-optical modulator or two modulators driven by two radio frequency fields with a $\dfrac{\pi}{2}$ carrier phase difference.

The time-dependent amplitude and temporal phase can be optimized either analytically or numerically to suppress the influence of the spatially modulated intensity profile and to further reduce the sensitivity to atom position variations.

Preferably, the time evolution of the quantum state of each target quantum object (here an atom with two-level quantum system), following the application of the control signal, is represented by a time-dependent quantum Hamiltonian.

The quantum Hamiltonian comprises drive terms proportional to the complex amplitude of the coupling strength between the target quantum object(s) and the standing light wave, called coupling strength. For an atom, the coupling strength is proportional to the field amplitude and the atomic dipole moment. More broadly, the complex amplitude of the coupling strength is given by the following equation:

$$\Omega(t) = A(t)e^{i\varphi(t)} \qquad (2)$$

where :

- $\Omega(t)$ is the complex amplitude of the coupling strength,
- $A(t)$ is a real quantity proportional to the amplitude of the standing light wave (modulus of the standing light wave amplitude),
- $\varphi(t)$ is the relative phase between the phase of the quantum objects (atomic phase) and the phase of the standing light wave,
- $i = \sqrt{-1}$ is the imaginary unit, and
- e is the exponential function.

The amplitude $A(t)$ and relative phase $\varphi(t)$ are tuned to yield the desired quantum operation, for instance setting the atomic state to specific values of the rotation angle $\theta$ and the phase angle $\phi$ of equations (1) and (2).

More precisely, the quantum Hamiltonian is for example given by the following equation:

$$\widehat{H} = \frac{\Omega(t)}{2} e^{ikx} \sigma^+ + \frac{\Omega(t)}{2} e^{-ikx} \sigma^+ + h.c \qquad (3)$$

where $\Omega(t)$ is the time-dependent and complex amplitude of the coupling strength which is proportional to the sum of the light field amplitudes, chosen here to be the same for lasers propagating in the +x and -x directions. Within the rotating wave approximation $\Omega(t)$ can be assumed to be a slowly varying function of time. $\sigma^+$ is the qubit raising operator, $kx$ is the local phase (depending on wavevector $k$ for each of the two lasers and the position of the atom $x$), and $h.c$ represents the hermitian conjugate. The principle of the method is understood to also apply to straightforward variations or extensions including multi-atom or multi-level systems.

The Hamiltonian H, via the time-dependent drive amplitude $\Omega(t)$, determines the evolution of a quantum state from some initial state to a final state according to the Schrödinger equation. Equivalently the Hamiltonian determines the time evolution operator which can be represented by a unitary matrix (quantum gate). By tailoring the time-dependence of $\Omega(t)$ it is possible to realize different quantum operations or quantum gates.

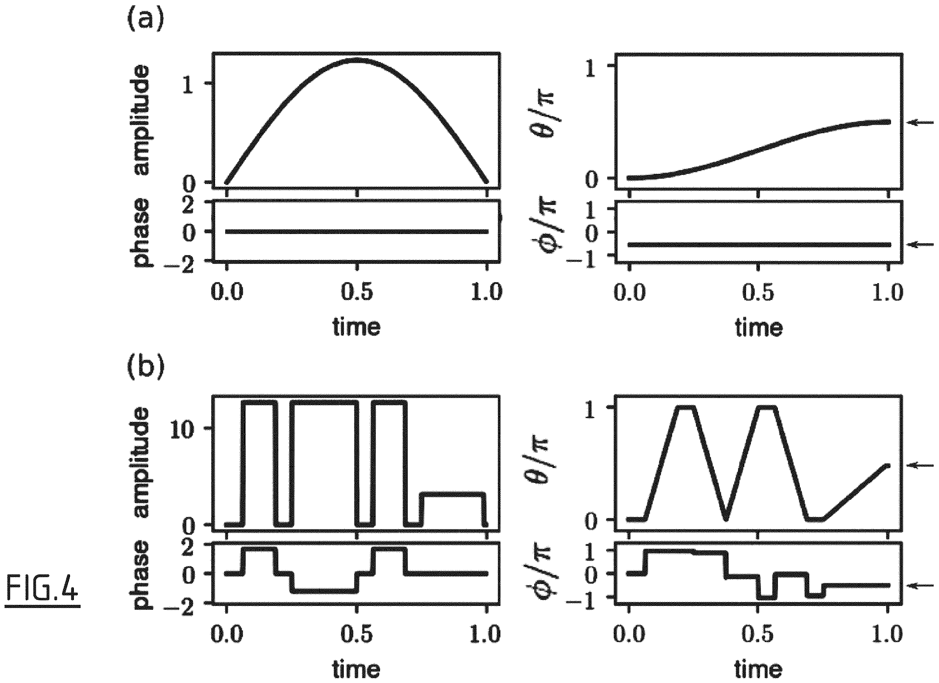

Two exemplary pulse sequences which both realize an X rotation gate RX($\pi$/2) with a rotation angle of $\theta = \frac{\pi}{2}$ are shown on figure 4. The left figures shows the time-dependent amplitude and phase of $\Omega(t)$, where the horizontal time axis has been scaled by a factor 1/T and the control amplitude has been scaled by a factor T, where T is the gate time. The right figures show the corresponding trajectories of the atomic state starting from the |0> state ($\theta = 0$). The angles $\theta$ and $\phi$ are the rotation angle and phase respectively as defined in previous equation (1). The arrows on the right hand side of the figure indicate the target state.

This type of gate can be combined with virtual Z gates or ac Stark shifted Z gates without population transfer to realize arbitrary single-qubit operations.

The pulse sequence (a) is best suited for fast operations in situations where the bandwidth or amplitude of the controls is limited by experimental constraints. The pulse sequence (b) is based on the BB1 composite pulse sequence which provides a superior degree of robustness to position fluctuations and pulse area fluctuations.

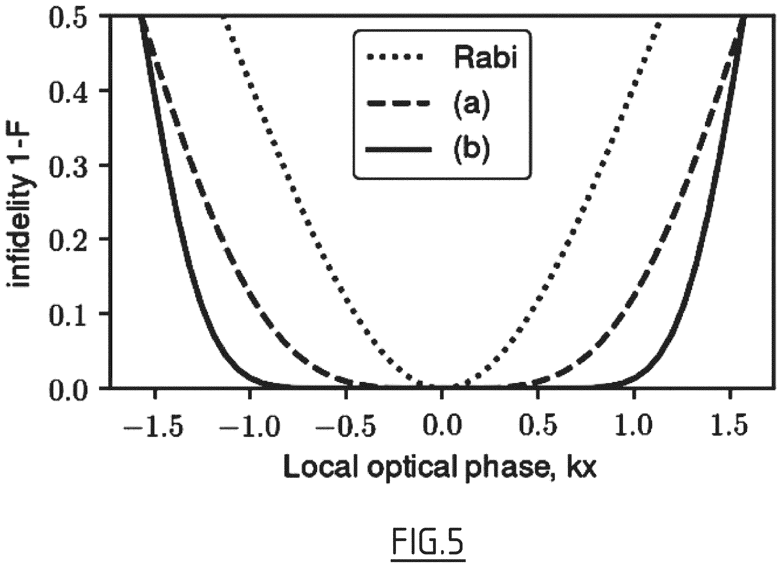

Both protocols provide significantly improved robustness against residual local phase noise and atom position variations when compared to a naive control pulse using a travelling wave laser (a "Rabi" $\frac{\pi}{2}$ pulse) as shown in figure 5. Here low values of the infidelity close to zero indicate a high robustness against phase noise and atomic position fluctuations.

In general the precise shape of the control laser amplitude and phase may be tailored in different ways to reduce sensitivity to other types of noise in addition to local phase noise.

The remainder of this description describes two implementations of the method which can be used to robustly control the quantum states of one or more target quantum objects (atoms) in the vicinity of many non-target quantum objects, called auxiliary quantum objects.

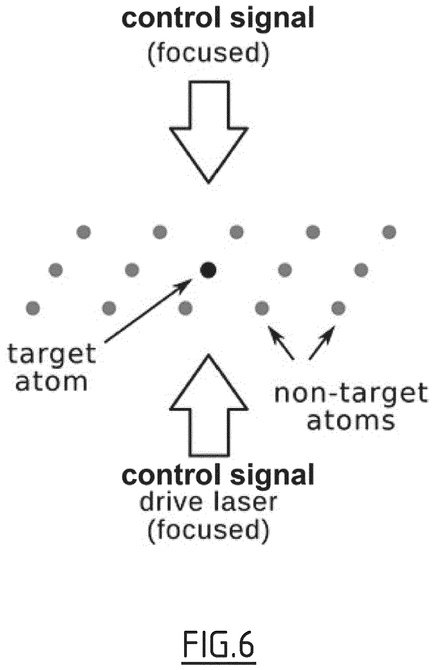

In a first example of embodiment as illustrated on figure 6, the system 10 of quantum objects 12 formed an array of quantum objects 12 in one or two dimensions. The array of quantum objects 12 defines an array plane. In this example, the two non-co-propagating light fields are i) counter propagating (propagating in opposite direction), ii) incident substantially perpendicularly to the array plane and iii) focused on the target quantum object(s) for spatial addressing. In this first example of embodiment, the control signal is applied preferentially to the target quantum objects and fulfills both an addressing and a control function.

In practice, the positioning of the control lasers can be achieved using a spatial light modulator or an acousto-optical deflector followed by a high numerical aperture lens to preferentially illuminate the target atom(s) only.

In addition, the complex amplitude of the drive lasers are constructed such that the atom undergoes quantum mechanical evolution which realizes a desired unitary transformation or a quantum gate in such a way as to minimize the sensitivity to local phases and/or variations in the atomic positions.

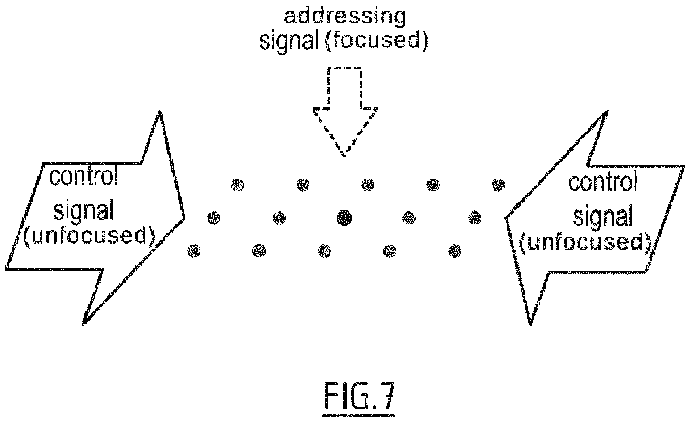

In a second example of embodiment as illustrated on figure 7, the system 10 of quantum objects 12 formed an array of quantum objects 12 in one or two or three dimensions. The actions of addressing the target quantum object(s) and controlling the target quantum object(s) are decoupled through the use of an addressing signal which is different from the control signal.

Preferably, for this second example, the method also comprises a step of applying the addressing signal only to the target quantum object(s). The addressing signal causes a shift in energy of the target quantum object(s). The control signal is applied to both the target quantum object(s) and to other quantum objects of the system 10, called auxiliary quantum objects.

Preferably, for this second example, the amplitude and the phase of the control signal are also chosen so as to:

- realize the quantum operation on the target quantum object(s) depending on the shift in energy of the target quantum object(s), and
- make the auxiliary quantum objects return to their original state at the end of the application of the control signal. More specifically, the auxiliary quantum objects undergo a time reversed evolution.

For example, one or more independent addressing laser(s) are tightly focused onto one or more target atoms and are positioned using spatial light modulators or acousto-optical deflectors.

The Hamiltonian describing the evolution of the target atom(s) is then:

$$\widehat{H} = \frac{\Omega(t)}{2}e^{ikx}\sigma^+ + \frac{\Omega(t)}{2}e^{-ikx}\sigma^+ + \frac{V(t)}{2}\sigma^+\sigma^- + h.c \qquad (4)$$

where $\sigma^-$ is the qubit lowering operator and $V(t)$ is a time-dependent frequency shift (ac Stark shift) of one of the atomic levels proportional to addressing laser intensity.

By tailoring the time-dependence of $\Omega(t)$ and $V(t)$ it is possible to realize different types of quantum operations. In contrast to the control lasers, the addressing laser(s) do not need to have a precise frequency or time-dependent phase.

Preferably, for this second example, the control signal satisfies a constraint stating that the complex amplitude of the coupling strength between the target quantum object(s) and the standing wave, called coupling strength, is an antisymmetric function of time (centered around the point $\frac{T}{2}$ where T is the duration of the quantum operation). In other words, the constraint satisfies the following relation:

$$\Omega\left(t + \frac{T}{2}\right) = -\Omega\left(-t + \frac{T}{2}\right) \qquad (5)$$

where:

- $\Omega(t)$ is the complex amplitude of the coupling strength, and
- T is the duration of the quantum operation.

Fulfilling this constraint enables to eliminate unwanted rotations of the auxiliary quantum objects (non-target atoms). This ensures that the non-target atoms undergo time reversed evolution after time T/2, and thus nominally return to their original state without errors.

Preferably, for this second example, the addressing signal is applied to the target quantum object(s) simultaneously to the control signal, preferably according to a smoothly varying time-dependent intensity. The time-dependent intensity is advantageously optimized with a particular shape in order to realize the desired unitary transformation for the target atom(s).

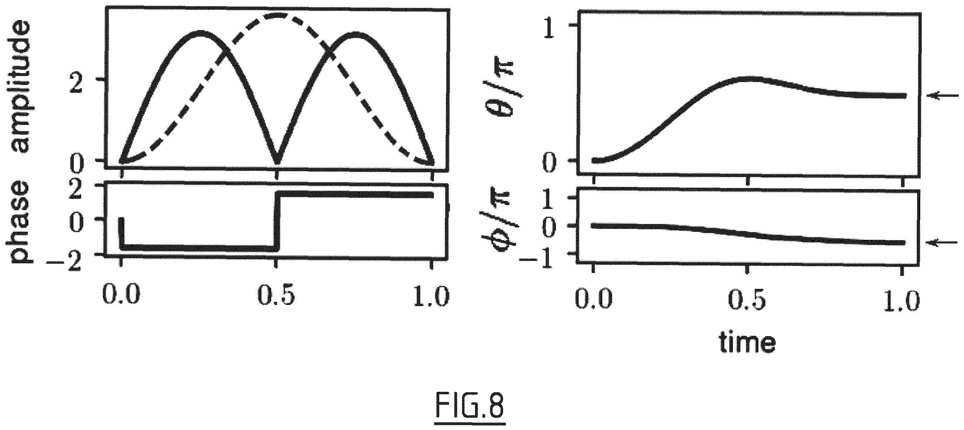

An example of the time-dependent addressing laser intensity which realizes a RX($\pi$/2) rotation gate is shown on figure 8. On the left the dotted line depicts the time dependent intensity of the addressing laser while the solid lines show the amplitude and phase of the control light field. The complex amplitude $\Omega(t)$ is an antisymmetric function of time.

The final state of the target atom(s) and non-target atoms is only weakly sensitive to phase noise and/or variations in the atomic positions similarly to the first embodiment.

Optionally, in a further step, the amplitude of the addressing laser can be optimized to suppress other errors, for example those associated with imprecise or fluctuating qubit frequencies. One way to achieve this is using dynamically corrected or geometric gates in combination with standing wave fields.

In the context of a quantum computation, multiple quantum operations or gates can be cascaded together sequentially, each corresponding to a different type of phase control. In this case, the time-reversal symmetry of the control pulses can provide additional advantages for noise cancellation, similar to dynamical decoupling sequences used in nuclear magnetic resonance experiments.

Hence, the control method enables realizing phase-controlled operations on quantum objects, especially on atoms and atom-like quantum systems, and implementing quantum operations involving a configuration that strongly reduces sensitivity to phase noise and variations in the atomic positions and/or motion.

In particular, the control method is particularly adapted for atomic transitions in the optical frequency domain or in situations where the inverse of the effective wave vectors of the control fields are comparable to the uncertainty in atomic positions. This is the case for optical frequency qubits based on atom tweezer arrays or trapped ions, laser excitation of atoms to Rydberg states or two photon Raman-like transitions involving non-co-propagating laser beams.

Hence, the control method is applicable to the realization of high fidelity quantum gates for scalable quantum computing systems, but also can have applications in atomic clocks and quantum sensors, where the quantum objects can usually be represented by (effective) two-level quantum systems.

In the first example of embodiment, the method involves one or more amplitude and phase controlled driving light fields which are made to form a standing wave. Atoms localized close to the antinodes of the standing wave can be made to realize phase-controlled quantum operations that are insensitive to local phases and phase fluctuations, including the effects of atom position variations and/or motion. For atomic arrays, individual atom addressing can be implemented using two focused and position controlled lasers aligned in a counter-propagating geometry.

In the second example of embodiment, robust phase-controlled operations is implemented using auxiliary lasers to induce local light shifts, thus eliminating the need for tight focusing and precise spatial position of the control lasers. Unwanted rotations on nontargeted atoms can be fully cancelled by exploiting a time-reversal symmetry, without the need for extra spin-echo pulses. Hence, the method enables phase-controlled quantum operations that are robust to atom position variations and motion while at the same time decoupling quantum objects control from spatial addressing, which will enable scaling up atomic quantum processors and high fidelity quantum objects control for large atomic registers.

The person skilled in the art will understand that the embodiments and variants described above can be combined to form new embodiments provided that they are technically compatible. As previously mentioned, the description was focused on atoms and atoms like systems, however, the present invention applies to all types of elements having two or more discrete energy levels that can be coupled to light.

**Claims**

1. A method for controlling a system (10) of quantum objects (12), the method comprising the following steps:

    - identifying target quantum object(s) of the system (10) of quantum object(s), and
    - applying a control signal on at least the target quantum object(s) to realize a controlled quantum operation on the target quantum object(s), the control signal being a standing light wave having an amplitude and a phase, the phase being spatially uniform over some regions of space, the standing light wave being applied such that the position of each target quantum object coincides with a region of spatially uniform phase.

2. A method according to claim 1, wherein the phase is constant over a distance comparable to or larger than the position uncertainty of the target quantum object(s).

3. A method according to claim 1 or 2, wherein the time evolution of the quantum state of each target quantum object, following the application of the control signal, is represented by a time-dependent quantum Hamiltonian, the quantum Hamiltonian comprising drive terms proportional to the complex amplitude of the coupling strength between the target quantum object(s) and the standing light wave, called coupling strength, the complex amplitude of the coupling strength being given by the following equation:

$$\Omega(t) = A(t)e^{i\varphi(t)}$$

where :

- $\Omega(t)$ is the complex amplitude of the coupling strength,
- $A(t)$ is a real quantity proportional to the amplitude of the standing light wave,
- $\varphi(t)$ is the relative phase between the phase of the quantum objects and the phase of the standing light wave,
- $i = \sqrt{-1}$ is the imaginary unit, and
- e is the exponential function.

4. A method according to any one of claims 1 to 3, wherein the control signal is formed by two non-co-propagating light fields having the same frequency, the non-co-propagating light fields being for example laser beams.

5. A method according to claim 4, wherein the system (10) of quantum objects (12) formed an array of quantum objects (12) in one or two dimensions, the array of quantum objects (12) defining an array plane, the two non-co-propagating light fields being i) counter propagating, ii) incident substantially perpendicularly to the array plane and iii) focused on the target quantum object(s) for spatial addressing.

6. A method according to claim 4, wherein the system (10) of quantum objects (12) formed an array of quantum objects (12) in one or two or three dimensions, the actions of addressing the target quantum object(s) and controlling the target quantum object(s) being decoupled through the use of an addressing signal which is different from the control signal.

7. A method according to claim 6, wherein the method comprises a step of applying the addressing signal only to the target quantum object(s), the addressing signal causing a shift in energy of the target quantum object(s), the control signal being applied to both the target quantum object(s) and to other quantum objects of the system (10), called auxiliary quantum objects.

8. A method according to claim 7, wherein the amplitude and the phase of the control signal are also chosen so as to:

- realize the quantum operation on the target quantum object(s) dependent on the shift in energy of the target quantum object(s), and
- make the auxiliary quantum objects return to their original state at the end of the application of the control signal.

9. A method according to claim 7 or 8, wherein the addressing signal is applied to the target quantum object(s) simultaneously to the control signal.

10. A method according to any one of claims 6 to 9, wherein the control signal satisfies a constraint stating that the complex amplitude of the coupling strength between the target quantum object(s) and the standing light wave, called coupling strength, is an antisymmetric function of time.

11. A method according to any one of claims 1 to 10, wherein the quantum objects (12) are chosen among the following elements: neutral atoms, ions, molecules, quantum dots, spin defects in solids, photons, electrons, superconducting qubits, or any other elements having two or more discrete energy levels that can be coupled to light.

12. A device (14) for controlling a system (10) of quantum objects (12), the device (14) comprising:

- at least one light source (16) to generate light fields, and
- a controller (18) configured to control the at least one light source (16) so as to carry out a method according to any one of claims 1 to 11.

FIG.1

**Travelling wave**

geometry $\mathcal{E}_0 e^{ikx}$

Intensity

optical phase $\Delta\varphi$

FIG.2

**Standing wave**

geometry

$$\frac{1}{\sqrt{2}}\mathcal{E}_0 e^{ikx} \qquad \frac{1}{\sqrt{2}}\mathcal{E}_0 e^{-ikx}$$

12

Intensity

optical
phase

$$\Delta\varphi = 0$$

FIG.3

FIG.4

FIG.5

**control signal**
(focused)

target
atom

non-target
atoms

**control signal**
drive laser
(focused)

<u>FIG.6</u>

addressing
signal (focused)

control
signal
(unfocused)

control
signal
(unfocused)

FIG.7

FIG.8

EP 4 328 811 A1

# EP 4 328 811 A1

## EUROPEAN SEARCH REPORT

Application Number

EP 22 30 6269

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JINYANG LIANG ET AL: "1.5% root-mean-square flat-intensity laser beam formed using a binary-amplitude spatial light modulator", APPLIED OPTICS, OPTICAL SOCIETY OF AMERICA, WASHINGTON, DC, US, vol. 48, no. 10, 1 April 2009 (2009-04-01) , pages 1955-1962, XP001522938, ISSN: 0003-6935, DOI: 10.1364/AO.48.001955 * abstract * * section 1 * * figure 1 * | 1-12 | INV. G06N10/40 ADD. G01R33/00 G04F5/14 |
| X | Jinyang Liang, Michael F. Becker, Rudolph N. Kohn, Daniel J. Heinzen: "Homogeneous one-dimensional optical lattice generation using a digital micromirror device-based high-precision beam shaper", Journal of Micro/Nanolithography, MEMS, and MOEMS, vol. 11, no. 2 31 May 2012 (2012-05-31), XP002808388, DOI: 10.1117/1.JMM.11.2.023002 Retrieved from the Internet: URL:https://www.spiedigitallibrary.org/jou rnals/journal-of-micro-nanopatterning-mate rials-and-metrology/volume-11/issue-02/023 002/Homogeneous-one-dimensional-optical-la ttice-generation-using-a-digital-micromirr or/10.1117/1.JMM.11.2.023002.full?SSO=1 [retrieved on 2023-01-11] * abstract * * sections 1, 2, 3.2 * * figure 2 * | 1-12 | TECHNICAL FIELDS SEARCHED (IPC) G06N G01R G04F |

-/--

The present search report has been drawn up for all claims

| Place of search | Date of completion of the search | Examiner |
|---|---|---|
| The Hague | 11 January 2023 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 22 30 6269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHMIEGELOW C.?T. ET AL: "Phase-Stable Free-Space Optical Lattices for Trapped Ions", PHYSICAL REVIEW LETTERS, vol. 116, no. 3, 1 January 2016 (2016-01-01), XP093012646, US ISSN: 0031-9007, DOI: 10.1103/PhysRevLett.116.033002 Retrieved from the Internet: URL:https://arxiv.org/pdf/1507.05207.pdf> * abstract * * page 1 * * page 4 * * figures 1, 2 * ----- | 1-12 | |

TECHNICAL FIELDS
SEARCHED     (IPC)

The present search report has been drawn up for all claims

| Place of search | Date of completion of the search | Examiner |
|---|---|---|
| The Hague | 11 January 2023 | Papadakis, Georgios |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)